# EUROPEAN PATENT APPLICATION

(11) **EP 3 979 573 A1**
(43) Date of publication of application: **06.04.2022**
(21) Application number: 19937292.1
(22) Date of filing: 05.07.2019
(51) Int. Cl.: H04L 12/70

(54) **RELAY DEVICE AND NETWORK SYSTEM**

(71) Applicant: MITSUBISHI ELECTRIC CORPORATION, Chiyoda-ku Tokyo 100-8310 (JP)
(72) Inventor: TAKAHASHI, Katsuyoshi, Tokyo 100-8310 (JP); KUBA, Ryohei, Tokyo 100-8310 (JP); ITO, Teruaki, Tokyo 100-8310 (JP)
(74) Representative: Pfenning, Meinig & Partner mbB
(86) International application number: PCT/JP2019/026840
(87) International publication number: WO 2021/005651

(57) **Abstract**

A transferring device (100A) acquires address information indicating a network address of an upper network (N0) and a host address of the transferring device. The transferring device generates a subnet address which is a network address of a lower network (N1) by replacing a lower bit portion in the network address indicated in the address information with the host address indicated in the address information. The transferring device selects a host address to be assigned to a terminal device (220A) from a host address range which is based on the subnet address, and provides for the terminal device, address information indicating the subnet address and the selected host address.

## Description

### Technical Field

The present invention relates to a transferring device in a network system.

### Background Art

In a control network used in an air conditioning and heating system, an increase in a communication amount due to expansion of a system scale and an increase in a system function is a problem.

Further, in order to enlarge the network, a means of dividing and hierarchizing the network is used. Network division and subnet division in an IP network are typical examples. IP stands for Internet Protocol.

A technique regarding the IP network is described in Non-Patent Literature 1.

In the air conditioning and heating system, a countermeasure by using the subnet division against enlargement is considered.

In the IP network, a plurality of subnets are connected with each other via a transferring device (router). Then, a packet for an arbitrary destination is sequentially forwarded to a next hop based on a routing table by each transferring device. Consequently, the packet is delivered to the arbitrary destination.

The number of routing table entries depending on the number of networks is required, and the routing table entries are required to be learnt and registered together with the next hop.

### Citation List

### Non-Patent Literature

Non-Patent Literature 1: Hiroshi Miyata, "An introduction to network technology & design for infrastructure/network engineers", SB Creative Corp., 31st, December, 2013

### Summary of Invention

### Technical Problem

General networks are connected with each other via a transferring-purpose device, and constitute a network system.

In the air conditioning and heating system, conventionally, an outdoor unit takes on repeater's transferring function and performs electrical transferring of a transmission frame. Then, installing a new device for the network division is financially difficult to be accepted. Then, the outdoor unit is required to take on a network transferring function. However, for the outdoor unit, generally, memory resources and CPU resources of embedded equipment are limited. Therefore, when a same network transferring function as the IP router is realized by the outdoor unit, there is a concern that resources are deficient in a dynamic route exchange process, a routing table management process, a destination search process, and the like.

The present invention aims to realize a network transferring function using limited resources.

### Solution to Problem

A transferring device according to the present invention is connected to an upper network and a lower network and transfers a packet

The transferring device comprises:
an address information acquisition unit to acquire address information indicating a network address of the upper network and a host address of the transferring device in the upper network; and
a subnet address generation unit to generate a subnet address which is a network address of the lower network by replacing a lower bit portion in a bit string representing the network address indicated in the acquired address information with a bit string representing the host address indicated in the acquired address information.

### Advantageous Effects of Invention

According to the present invention, it is possible to obtain a subnet address of a lower network based on address information in an upper network without performing a convention process such as a dynamic route exchange process, a routing table management process, or a destination search process. Therefore, it is possible to realize a network transferring function by using limited resources.

### Brief Description of Drawings

Fig. 1 is a configuration diagram of a network system 200 according to a first embodiment.
Fig. 2 is a configuration diagram of a transferring device 100 according to the first embodiment.
Fig. 3 is a configuration diagram of an address management unit 110 according to the first embodiment.
Fig. 4 is a configuration diagram of a packet transfer unit 120 according to the first embodiment.
Fig. 5 is a flowchart of an address management process according to the first embodiment.
Fig. 6 is a diagram illustrating a specific example of the address management process according to the first embodiment.
Fig. 7 is a flowchart of a packet transferring process according to the first embodiment.
Fig. 8 is a diagram illustrating a specific example of the packet transferring process according to the first embodiment.
Fig. 9 is a configuration diagram of a network system 200 according to a second embodiment.
Fig. 10 is a configuration diagram of an address according to a second embodiment.
Fig. 11 is a flowchart of a packet transferring process according to the second embodiment.
Fig. 12 is a flowchart of a next hop address generation process (S220) according to the second embodiment.
Fig. 13 is a flowchart of the next hop address generation process (S220) according to the second embodiment.
Fig. 14 is a configuration diagram of a transferring device 100 according to a third embodiment.
Fig. 15 is a configuration diagram of a network system 200 (normal time) according to the third embodiment.
Fig. 16 is a configuration diagram of the network system 200 (failure time) according to the third embodiment.
Fig. 17 is a hardware configuration diagram of the transferring device 100 according to the embodiments.

### Description of Embodiments

In the embodiments and the drawings, the same reference numerals are assigned to the same elements or corresponding elements. Descriptions of elements assigned with the same reference numerals as the described elements will be omitted or simplified as appropriate. Arrows in the drawings mainly indicate flows of data or flows of processes.

### First Embodiment.

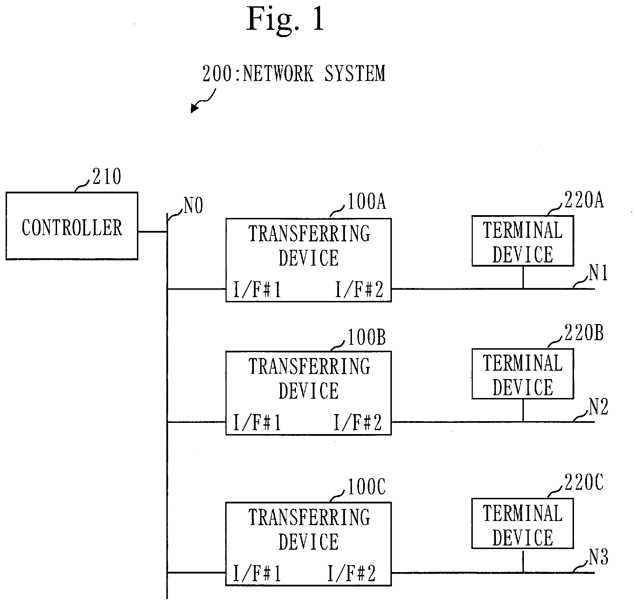

A network system 200 will be described with reference to Figs. 1 to 8.

### ^{∗∗∗} Description of Configuration ^{∗∗∗}

A configuration of the network system 200 will be described with reference to Fig. 1.

The network system 200 is a communication system in a network constituted of a plurality of subnets (N0 to N3).

The network system 200 includes a controller 210, a plurality of transferring devices (100A to 100C), and a plurality of terminal devices (220A to 220C).

When the transferring devices (100A to 100C) are not specified, each one is referred to as a transferring device 100.

When the terminal devices (220A to 220C) are not specified, each one is referred to as a terminal device 220.

The controller 210 is a computer that controls the network system 200, and is connected to a subnet N0.

The transferring device 100 is a communication device that is connected to an upper network and a lower network and transfers a packet. Specifically, the transferring device 100 is a router.

The transferring device 100 includes an I/F#1 and an I/F#2. The I/F#1 is connected to the upper network, and the I/F#2 is connected to the lower network. I/F stands for interface.

The transferring device 100A is connected to the subnet N0 and a subnet N1. An upper network of the transferring device 100A is the subnet N0, and a lower network of the transferring device 100A is the subnet N1.

The transferring device 100B is connected to the subnet N0 and a subnet N2. An upper network of the transferring device 100B is the subnet N0, and a lower network of the transferring device 100B is the subnet N2.

The transferring device 100C is connected to the subnet N0 and a subnet N3. An upper network of the transferring device 100C is the subnet N0, and a lower network of the transferring device 100C is the subnet N3.

The terminal device 220 is a computer that is connected to the lower network of the transferring device 100.

The terminal device 220A is connected to the subnet N1.

The terminal device 220B is connected to the subnet N2.

The terminal device 220C is connected to the subnet N3.

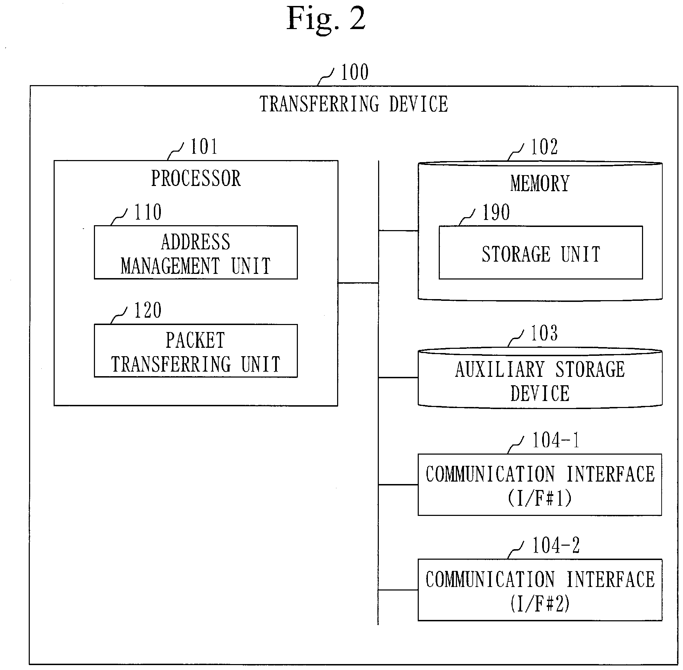

A configuration of the transferring device 100 will be described with reference to Fig. 2.

The transferring device 100 is a computer that includes pieces of hardware such as a processor 101, a memory 102, an auxiliary storage device 103, and a plurality of communication interfaces (104-1 and 104-2). These pieces of hardware are connected with each other via signal lines.

When the communication interfaces (104-1 and 104-2) are not specified, each one is referred to as a communication interface 104.

The processor 101 is an IC that performs a calculation process, and controls other pieces of hardware. For example, the processor 101 is a CPU, a DSP, or a GPU.

IC stands for Integrated Circuit.

CPU stands for Central Processing Unit.

DSP stands for Digital Signal Processor.

GPU stands for Graphics Processing Unit.

The memory 102 is a volatile storage device. The memory 102 is referred to as a main storage device or a main memory. For example, the memory 102 is a RAM. Data stored in the memory 102 is stored in the auxiliary storage device 103 as necessary.

RAM stands for Random Access Memory.

The auxiliary storage device 103 is a non-volatile storage device. For example, the auxiliary storage device 103 is a ROM, an HDD, or a flash memory. Data stored in the auxiliary storage device 103 is loaded into the memory 102 as necessary.

ROM stands for Read Only Memory.

HDD stands for Hard Disk Drive.

The communication interface 104 is an interface (port) for communication.

The communication interface 104-1 is described as the I/F#1, and the communication interface 104-2 is described as the I/F#2.

The transferring device 100 includes elements such as an address management unit 110 and a packet transfer unit 120. These elements are realized by software.

The auxiliary storage device 103 stores a transferring program for causing a computer to function as the address management unit 110 and the packet transfer unit 120. The transferring program is loaded into the memory 102 and executed by the processor 101.

The auxiliary storage device 103 further stores an OS. At least a part of the OS is loaded into the memory 102 and executed by the processor 101.

The processor 101 executes the transferring program while executing the OS.

OS stands for Operating System.

Input/output data of the transferring program is stored in a storage unit 190.

The memory 102 functions as the storage unit 190. However, storage devices such as the auxiliary storage device 103, a register in the processor 101, and a cash memory in the processor 101 may function as the storage unit 190 instead of the memory 102 or together with the memory 102.

The transferring device 100 may include a plurality of processors that substitute for the processor 101. The plurality of processors share a role of the processor 101.

The transferring program can be recorded (stored) in a non-volatile recording medium such as a flash memory in a computer-readable manner.

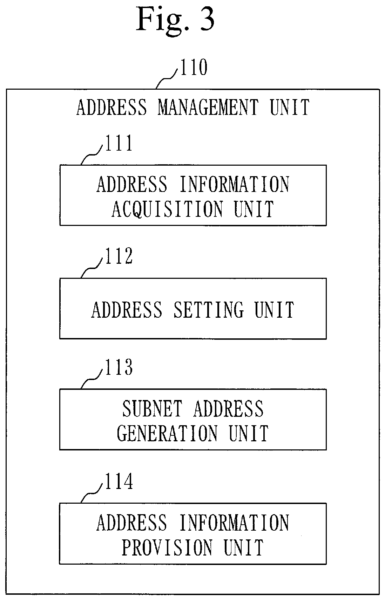

A configuration of the address management unit 110 will be described with reference to Fig. 3.

The address management unit 110 includes elements such as an address information acquisition unit 111, an address setting unit 112, a subnet address generation unit 113, and an address information provision unit 114. Functions of these elements will be described later.

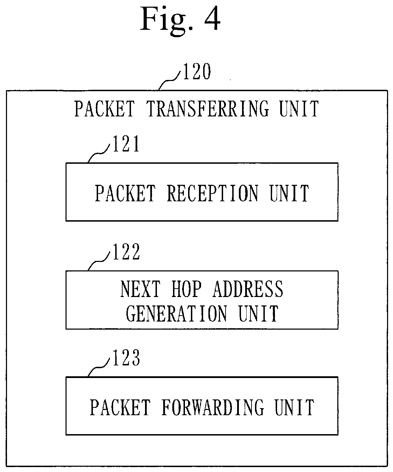

A configuration of the packet transfer unit 120 will be described with reference to Fig. 4.

The packet transfer unit 120 includes elements such as a packet reception unit 121, a next hop address generation unit 122, and a packet forwarding unit 123. Functions of these elements will be described later.

### ^{∗∗∗} Description of Operation ^{∗∗∗}

A procedure of operation of the transferring device 100 is equivalent to a transferring method. Further, the procedure of the operation of the transferring device 100 is equivalent to a procedure of a process by the transferring program.

When an address is not specified particularly, "address" means a communication address. A specific example of the communication address is an IP address. IP stands for Internet Protocol.

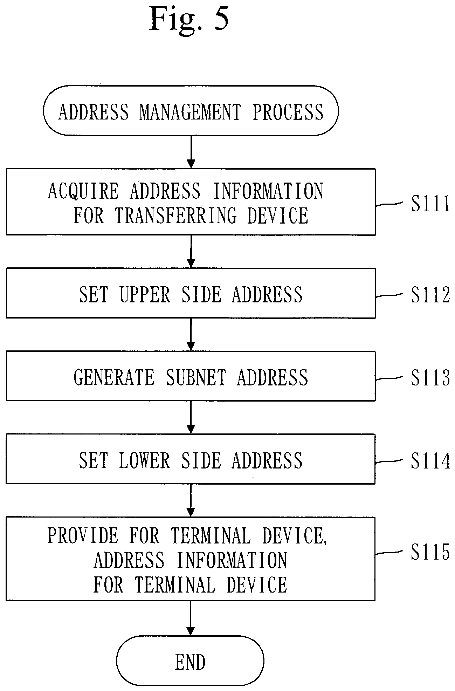

An address management process will be described with reference to Fig. 5.

The address management process is a process to be executed by the address management unit 110 (see Fig. 3).

In step S111, the address information acquisition unit 111 acquires address information for the transferring device 100.

Then, the address information acquisition unit 111 stores in the storage unit 190, the address information for the transferring device 100.

The address information for the transferring device 100 indicates an address of the transferring device 100 in the upper network. This address is referred to as "upper side address".

The upper side address indicates a network address of the upper network, a host address of the transferring device 100 in the upper network, and a network mask length.

The network address is also called a network part, and the host address is also called a host part.

The network mask length is a length of the network mask, and is also called a subnet mask length. The network mask is also called a subnet mask.

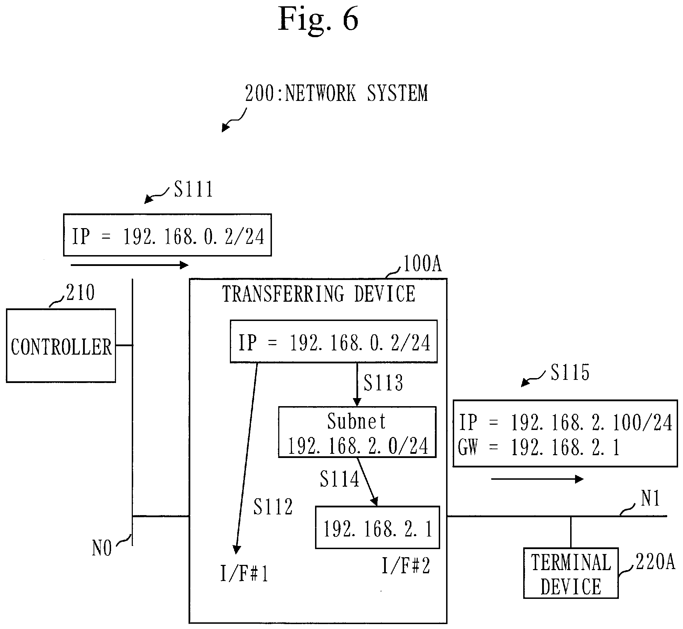

A specific example of step S111 will be described with reference to Fig. 6.

The controller 210 distributes to the transferring device 100A, address information for the transferring device 100A. For a distribution method, a DHCP in an IP protocol is well known. DHCP stands for Dynamic Host Configuration Protocol.

The address information acquisition unit 111 receives the address information distributed from the controller 210 via the I/F#1.

The address information for the transferring device 100A indicates "192.168.0.2/24".

Returning to Fig. 5, descriptions will be continued from step S112.

In step S112, the address setting unit 112 extracts the upper side address from the address information for the transferring device 100, and sets the extracted upper side address to the I/F#1.

With reference to Fig. 6, a specific example of step S112 will be described.

The address setting unit 112 extracts the upper side address "192.168.0.2/24" from the address information for the transferring device 100A, and sets the extracted upper side address to the I/F#1.

Returning to Fig. 5, and descriptions will be continued from step S113.

In step S113, the subnet address generation unit 113 generates a subnet address which is a network address of the lower network, based on the address information for the transferring device 100.

Specifically, the subnet address generation unit 113 replaces with a bit string representing a host address indicated in the address information, a lower bit portion in a bit string representing the network address indicated in the address information. A network address obtained thereby is the subnet address.

A specific example of step S113 will be described with reference to Fig. 6.

The address information for the transferring device 100A indicates "192.168.0.2/24". "192.168.0" is the network address, "2" is the host address, and "24" is the network mask length.

The subnet address generation unit 113 replaces a lower M bit of the network address "192.168.0" with a bit string representing the host address "2". In this example, M=8. As a result, a subnet address which is "192.168.2.0/24" is generated.

A mask length M may be set in the storage unit 190 in advance, or acquired as a part of the address information.

In step S114, the address setting unit 112 generates an address of the transferring device 100 in the lower network based on the generated subnet address. This address is referred to as "lower side address".

The address setting unit 112 sets the generated lower side address to the I/F#2.

Specifically, the address setting unit 112 selects the host address to be assigned to the transferring device 100, from a host address range which is based on the generated subnet address.

An address indicating the generated subnet address and the selected host address is the lower side address.

A specific example of step S114 will be described with reference to Fig. 6.

The address setting unit 112 selects a host address "1" from a host address range "1 to 255" which is based on the subnet address "192.168.2.0/24". In this case, the lower side address of the transferring device 100A is "192.168.2.1".

The address setting unit 112 sets the lower side address to the I/F#2.

Returning to Fig. 5, step S115 will be described.

In step S115, the address information provision unit 114 generates address information for the terminal device 220, based on the generated subnet address.

Then, the address information provision unit 114 provides for the terminal device 220, the address information for the terminal device 220.

The address information for the terminal device 220 indicates an address of the terminal device 220 in the lower network and an address of a default gateway in the lower network.

Specifically, the address information provision unit 114 selects a host address to be assigned to the terminal device 220 from the host address range which is based on the generated subnet address.

An address indicating the generated subnet address and the selected host address is the address of the terminal device 220 in the lower network.

The default gateway in the lower network is the transferring device 100. That is, the address of the default gateway in the lower network is the address of the transferring device 100 in the lower network.

A specific example of step S115 will be described with reference to Fig. 6.

The address information provision unit 114 has selected a host address "100" from the host address range "1 to 255" which is based on the subnet address "192.168.2.0/24". In this case, the address of the terminal device 220A in the subnet N1 is "192.168.2.100/24". Further, the lower side address of the transferring device 100A is "192.168.2.1".

The address information provision unit 114 distributes to the terminal device 220A, the address information for the terminal device 220, according to an address distribution request from the terminal device 220A. For a distribution method, a DHCP in an IP protocol is well known.

The address information for the terminal device 220 indicates "192.168.2.100/24" and "192.168.2.1".

The terminal device 220A sets "192.168.2.100/24" as the address of the terminal device 220A, and sets "192.168.2.1" as the address of the default gateway.

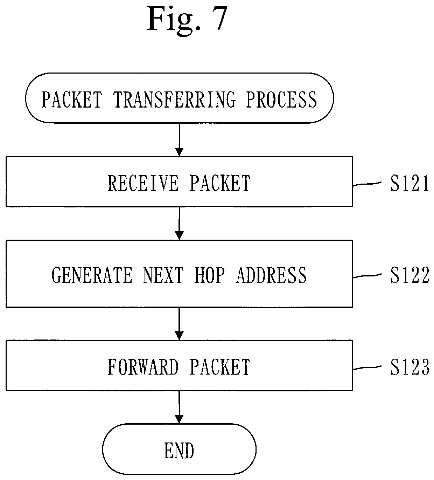

A packet transferring process will be described with reference to Fig. 7.

The packet transferring process is a process to be executed by the packet transfer unit 120.

In step S121, the packet reception unit 121 receives from the terminal device 220 connected to the lower network, a packet which is for a destination device.

This destination device is a terminal device connected to a subnet different from the lower network.

The subnet to which this destination device is connected is referred to as a destination subnet.

In step S122, the next hop address generation unit 122 generates a next hop address as follows.

The next hop address is an address of a next hop.

The next hop is a device recognized using the next hop address, and a forwarding destination of the packet. The next hop is connected to the upper network and the destination subnet.

First, the next hop address generation unit 122 extracts the address of the destination device from the received packet.

Specifically, the next hop address generation unit 122 extracts the destination address from the received packet.

Next, the next hop address generation unit 122 extracts a network address of the destination subnet from the address of the destination device.

Specifically, the next hop address generation unit 122 extracts the network address from the destination address by using the network mask length indicated in the address information for the transferring device 100. The extracted network address is the network address of the destination subnet.

Next, the next hop address generation unit 122 extracts a lower bit portion from a bit string representing the network address of the destination subnet.

Then, the next hop address generation unit 122 generates an address by incorporating into the network address of the upper network, the extracted lower bit portion as the host address. The generated address is the next hop address.

In step S123, the packet forwarding unit 123 forwards the received packet to the next hop.

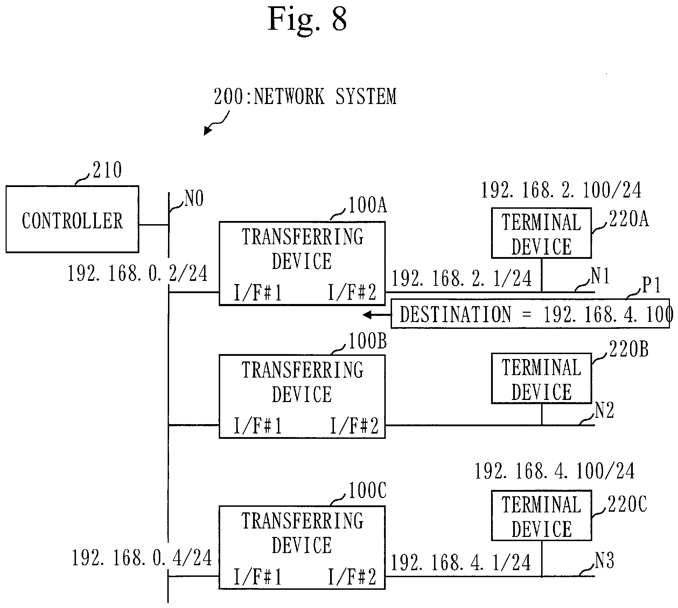

A specific example of a packet transferring process will be described with reference to Fig. 8.

The terminal device 220A is to transmit a packet P1 whose destination is the terminal device 220C.

The subnet N1 (network address: 192.168.2) where the terminal device 220A belongs is different from the subnet N3 (network address: 192.168.4) where the terminal device 220C belongs. Therefore, the terminal device 220A transmits the packet P1 with the default gateway (address: 192.168.2.1) as the next hop. The destination address of the packet PI, that is the address of the terminal device 220C is "192.168.4.100".

The packet reception unit 121 receives the packet P1.

The next hop address generation unit 122 generates a next hop address "192.168.0.4" based on the destination address of the packet P1.

The packet forwarding unit 123 forwards the packet P1 to the transferring device 100C recognized using the next hop address.

The transferring device 100C receives the packet P1. The network address "192.168.4" in the destination address of the packet P1 is the network address of the subnet N3. The transferring device 100C is connected to the subnet N3. Therefore, the transferring device 100C forwards the packet P1 to the terminal device 220C of the subnet N3.

Then, the terminal device 220C receives the packet P1.

The next hop address generation unit 122 generates the next hop address "192.168.0.4" as follows.

First, the next hop address generation unit 122 extracts a network address "192.168.4" from the destination address "192.168.4.100" of the packet P1 by using a network mask length "24".

Next, the next hop address generation unit 122 extracts a lower M bit of the network address "192.168.4" by using the mask length M. In this example, M=8. That is, the next hop address generation unit 122 extracts "4" represented in the lower M bit. The mask length M is stored in the storage unit 190.

Then, the next hop address generation unit 122 incorporates into the network address "192.168.0" of the subnet N0, "4" extracted from the network address of the destination address, as the host address.

Consequently, the next hop address "192.168.0.4" is generated.

### ^{∗∗∗} Description of Examples ^{∗∗∗}

The network system 200 can be applied to an air conditioning and heating network. In that case, the outdoor unit is to function as the transferring device 100.

An address distribution server may be provided with the network system 200. In that case, the address distribution server, instead of the controller 210, is to distribute the address information.

### ^{∗∗∗} Effect of First Embodiment ^{∗∗∗}

Each transferring device 100 can decide: the address which is for the lower network interface (I/F#2); and the address which is for the terminal device 220, by obtaining the address which is for the upper network interface (I/F#1). Thus, it is unnecessary to perform address setting individually for each transferring device 100 and each terminal device 220. Therefore, it is possible to simplify the setting of each transferring device 100.

Since the transferring device 100 does not need to have the routing table, the transferring device 100 does not need to perform a process of searching in the routing table. However, the transferring device 100 can generate the address of the next hop and forward the packet.

That is, the transferring device 100 does not require a memory which is for the routing table, and a load of the process of searching in the routing table is not applied to the transferring device 100. Further, since the transferring device 100 does not need to exchange pieces of path information between devices for developing the routing table, a load of the process for exchanging the pieces of path information is not applied to the transferring device 100. Therefore, it is possible to reduce the amount of resource required for the transferring device 100.

### Second Embodiment.

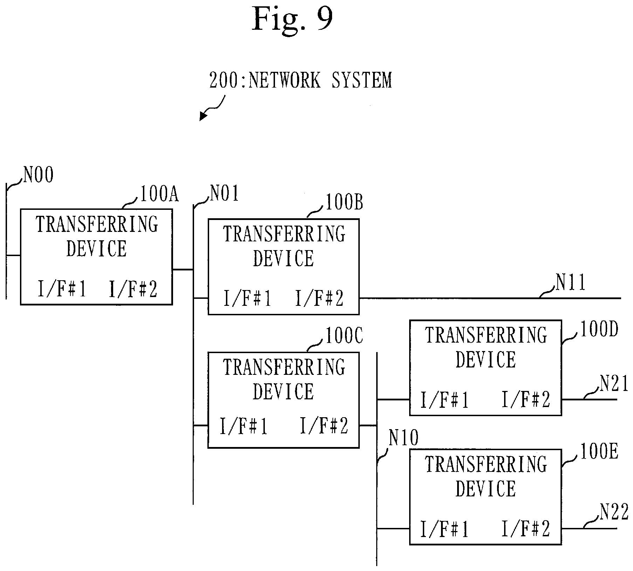

For a mode in which the network system 200 is constituted of a plurality of hierarchies of subnets, mainly matters different from the first embodiment will be described with reference to Fig. 9 to 13.

### ^{∗∗∗} Description of Configuration ^{∗∗∗}

A configuration of the network system 200 will be described with reference to Fig. 9.

The network system 200 is hierarchized into a tree structure, and is constituted of a plurality of hierarchies of subnets.

Each transferring device 100 is placed between subnets in two consecutive hierarchies.

A transferring device 100A is placed between a subnet N00 in the zeroth hierarchy and a subnet N01 in the first hierarchy. The subnet N00 in the zeroth hierarchy is the upper network, and the subnet N01 in the first hierarchy is the lower network.

A transferring device 100B is placed between the subnet N01 in the first hierarchy and a subnet N11 in the second hierarchy. The subnet N01 in the first hierarchy is the upper network, and the subnet N11 in the second hierarchy is the lower network.

A transferring device 100C is placed between the subnet N01 in the first hierarchy and a subnet N10 in the second hierarchy. The subnet N01 in the first hierarchy is the upper network, and the subnet N10 in the second hierarchy is the lower network.

A transferring device 100D is placed between the subnet N1O in the second hierarchy and a subnet N21 in the third hierarchy. The subnet N10 in the second hierarchy is the upper network, and the subnet N21 in the third hierarchy is the lower network.

A transferring device 100E is placed between the subnet N10 in the second hierarchy and a subnet N22 in the third hierarchy. The subnet N10 in the second hierarchy is the upper network, and the subnet N22 in the third hierarchy is the lower network.

A configuration of each transferring device 100 is the same as the configuration in the first embodiment (see Figs. 2 to 4).

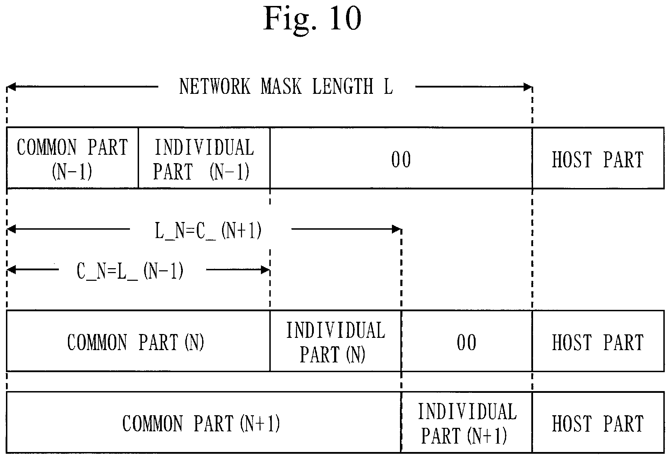

A configuration of an address will be described with reference to Fig. 10.

The address has a network part and a host part.

The network part has a network mask length L, and indicates a network address of a subnet in each hierarchy.

The host part indicates a host address of a device belonging to the subnet in each hierarchy.

The network part has a common part and an individual part.

The common part indicates a subnet address in common among one or more subnets which belong to the same hierarchy.

The individual part indicates a subnet address which is different in each subnet which belongs to the same hierarchy.

A mask length corresponding to a whole subnet address (common part + individual part) in the N-th hierarchy is referred to as "individual mask length L_N".

A mask length corresponding to the common part in the subnet address in the N-th hierarchy is referred to as "common mask length C_N".

The individual mask length L_N in the N-th hierarchy is equal to a common mask length C_(N+1) in the (N+1)-th hierarchy.

A common mask length C_N in the N-th hierarchy is equal to the individual mask length L_(N-1) in the (N-1)-th hierarchy.

The transferring device 100 placed between the N-th hierarchy and the (N+1)-th hierarchy is referred to as the transferring device 100 in the N-th hierarchy.

The storage unit 190 of the transferring device 100 in the N-th hierarchy stores mask lengths such as the network mask length L, the individual mask length L_N, the common mask length C_N, and the common mask length C_(N+1).

The network mask length L is equivalent to the network address length of the upper network, and is stored in the storage unit 190 as a part of the address information.

Each mask length other than the network mask length L may be stored in the storage unit 190 in advance, or may be stored in the storage unit 190 as a part of the address information.

### ^{∗∗∗} Description of Operation ^{∗∗∗}

An address management process is the same as the process in the first embodiment (see Fig. 5).

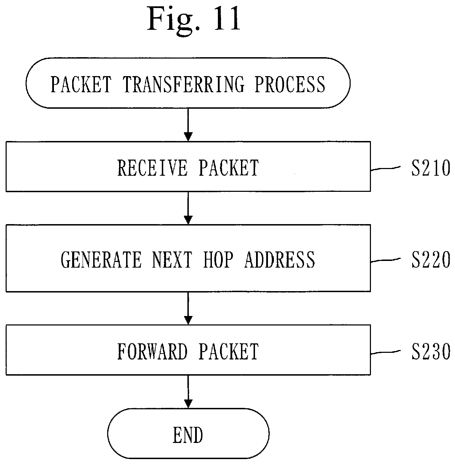

A packet transferring process will be described with reference to Fig. 11.

In step S210, the packet reception unit 121 receives a packet.

Step S210 is the same as step S121 in the first embodiment (see Fig. 7).

In step S220, the next hop address generation unit 122 generates the next hop address.

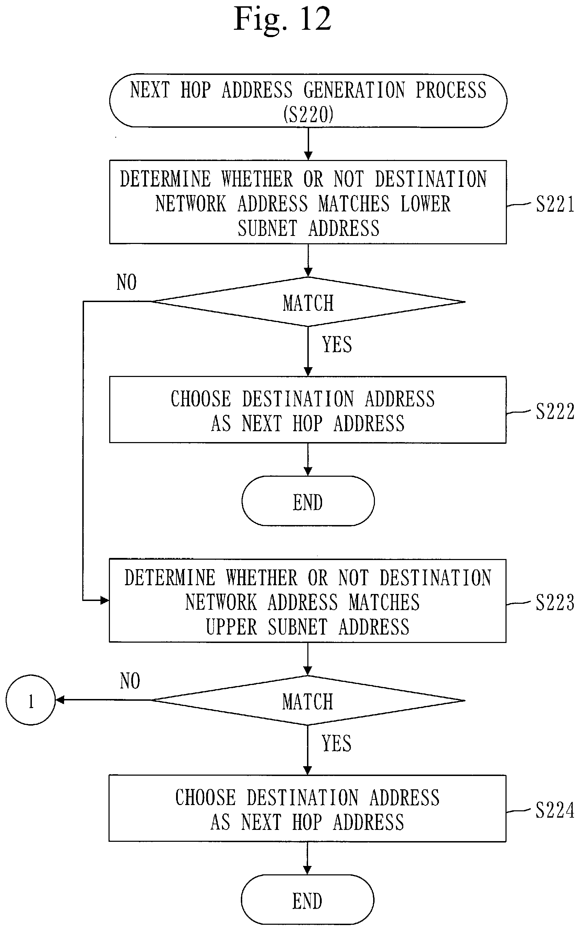

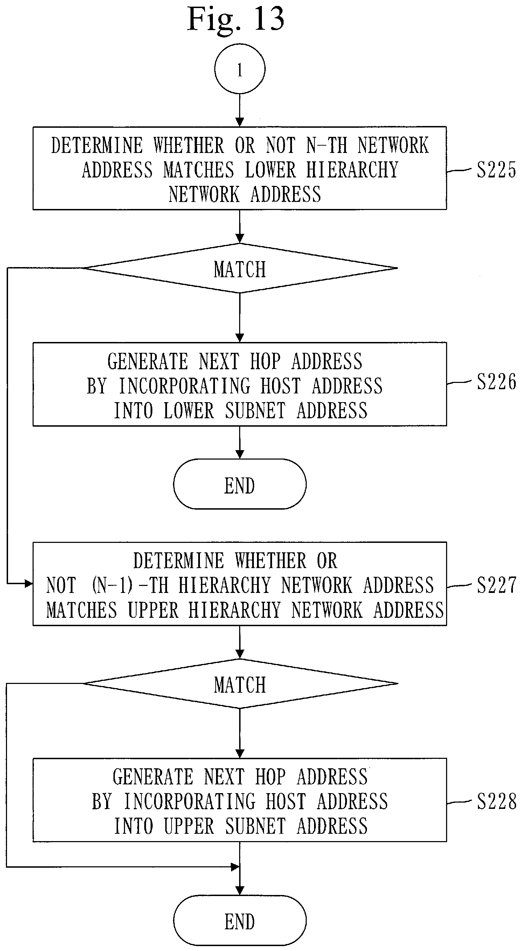

A next hop address generation process (S220) in the transferring device 100 in the N-th hierarchy will be described with reference to Figs. 12 and 13.

In step S221, the next hop address generation unit 122 determines whether or not the destination network address matches a lower subnet address, in a following manner.

First, the next hop address generation unit 122 extracts the destination address from the received packet.

Next, the next hop address generation unit 122 extracts the destination network address from the extracted destination address. The destination network address is a network address which is based on a subnet mask which is for the upper network, that is a subnet mask having the network mask length L.

Next, the next hop address generation unit 122 compares the extracted destination network address with the lower subnet address. The lower subnet address is a network address of the lower network.

When the destination network address matches the lower subnet address, the process proceeds to step S222.

When the destination network address does not match the lower subnet address, the process proceeds to step S223.

In step S222, the next hop address generation unit 122 chooses the destination address of the received packet as the next hop address.

After step S222, the process ends.

In step S223, the next hop address generation unit 122 determines whether or not the destination network address matches an upper subnet address.

The destination network address has been obtained in step S221.

The upper subnet address is a network address of the upper network.

When the destination network address matches the upper subnet address, the process proceeds to step S224.

When the destination network address does not match the upper subnet address, the process proceeds to step S225.

In step S224, the next hop address generation unit 122 chooses the destination address of the received packet as the next hop address.

After step S224, the process ends.

In step S225, the next hop address generation unit 122 determines whether or not the N-th hierarchy network address matches the lower hierarchy network address, as follows.

First, the next hop address generation unit 122 extracts an N-th hierarchy network address from the destination address of the received packet. The N-th hierarchy network address is a network address which is based on an N-th hierarchy subnet mask. The N-th hierarchy subnet mask is a subnet mask having the individual mask length L_N.

Next, the next hop address generation unit 122 extracts from the subnet address of the lower network, the network address which is based on the N-th hierarchy subnet mask. The extracted network address is referred to as a lower hierarchy network address.

Then, then next hop address generation unit 122 compares the N-th hierarchy network address with the lower hierarchy network address.

When the N-th hierarchy network address matches the lower hierarchy network address, the process proceeds to step S226.

The N-th hierarchy network address does not match the lower hierarchy network address, the process proceeds to step S227.

In step S226, the next hop address generation unit 122 generates the next hop address as follows.

First, the next hop address generation unit 122 extracts the (N+1)-th hierarchy network address from the destination address of the received packet. The (N+1)-th hierarchy network address is a network address which is based on the (N+1)-th hierarchy subnet mask. The (N+1)-th hierarchy subnet mask is a subnet mask having an individual mask length L_(N+1).

Next, the next hop address generation unit 122 extracts the lower bit string from the bit string representing the extracted (N+1)-th hierarchy network address. The lower bit string has a bit number which is obtained using "L_(N+1)-L_N". A host address represented by the extracted lower bit string is referred to as a host address H_(N+1).

Then, the next hop address generation unit 122 generates an address by incorporating the host address H_(N+1) into the lower subnet address. The generated address is the next hop address.

After step S226, the process ends.

In step 227, the next hop address generation unit 122 determines whether or not the (N-1)-th hierarchy network address matches the lower hierarchy network address, as follows.

First, the next hop address generation unit 122 extracts the (N-1)-th hierarchy network address from the destination address of the received packet. The (N-1)-th hierarchy network address is a network address which is based on the (N-1)-th hierarchy subnet mask. The (N-1)-th hierarchy subnet mask is a subnet mask having the individual mask length L_(N-1), that is the common mask length C_N.

Next, the next hop address generation unit 122 extracts from the network address of the upper network, a network address which is based on the (N-1)-th hierarchy subnet mask. The extracted network address is referred to as an upper hierarchy network address.

Then, the next hop address generation unit 122 compares the (N-1)-th hierarchy network address with the upper hierarchy network address.

When the (N-1)-th hierarchy network address matches the upper hierarchy network address, the process proceeds to step S228.

When the (N-1)-th hierarchy network address does not match the upper hierarchy network address, the next hop address is not generated, and the process ends.

In step S228, the next hop address generation unit 122 generates the next hop address as follows.

First, the next hop address generation unit 122 extracts the lower bit string from the bit string representing the N-th hierarchy network address. The N-th hierarchy network address is extracted in step S225. The lower bit string has a bit number obtained using "L_N-C_N". The host address represented by the extracted lower bit string is referred to as the host address H_N.

Then, the next hop address generation unit 122 generates an address by incorporating the host address H_N into the upper subnet address. The generated address is the next hop address.

After step S228, the process ends.

Returning to Fig. 11, the step S230 will be described.

In step S230, the packet forwarding unit 123 forwards the received packet to the next hop.

Specifically, the packet forwarding unit 123 operates as follows.

When the next hop address is decided in step S222 (see Fig. 12), the packet forwarding unit 123 forwards the packet to the next hop of the lower network. However, when the communication interface where the packet has been received is the I/F#2, the packet forwarding unit 123 discards the packet without forwarding.

When the next hop address is decided in step S224 (see Fig. 12), the packet forwarding unit 123 forwards the packet to the next hop of the upper network. However, when the communication interface where the packet has been received is the I/F#1, the packet forwarding unit 123 discards the packet without forwarding.

When the next hop address is generated in step S226 (see Fig. 13), the packet forwarding unit 123 forwards the packet to the next hop of the lower network. However, when the communication interface where the packet has been received is the I/F#2, the packet forwarding unit 123 discards the packet without forwarding.

When the next hop address is generated in step S228 (see Fig. 13), the packet forwarding unit 123 the packet forwarding unit 123 forwards the packet to the next hop of the upper network. However, when the communication interface where the packet has been received is the I/F#1, the packet forwarding unit 123 discards the packet without forwarding.

When the next hop address is not decided and generated, the packet forwarding unit 123 operates as follows.

When the transferring device 100 is not a transferring device in the most upper hierarchy, and the communication interface where the packet has been received is the I/F#2, the packet forwarding unit 123 forwards the packet to a default gateway of the upper network.

When the transferring device 100 is a transferring device in the most upper hierarchy, the packet forwarding unit 123 discards the packet without forwarding.

When the communication interface where the packet has been received is the I/F#1, the packet forwarding unit 123 discards the packet without forwarding.

### ^{∗∗∗} Effect of Second Embodiment ^{∗∗∗}

According to the second embodiment, it is possible to hierarchize the network into a plurality of stages. Therefore, it is possible to constitute the network system 200 by flexibly responding to the system where the network system 200 has been applied.

Since the transferring device 100 does not need to have a routing table, the transferring device 100 does not need to perform the process of searching in the routing table. However, the transferring device 100 can generate the address of the next hop and forward the packet.

That is, the transferring device 100 does not require the memory for the routing table, and the load of the process for searching in the routing table is not applied to the transferring device 100. Further, since the transferring device 100 does not need to exchange pieces of path information between devices for developing the routing table, the load of the process for exchanging the pieces of path information is not applied to the transferring device 100. Therefore, it is possible to reduce the amount of resource required for the transferring device 100.

### Third Embodiment.

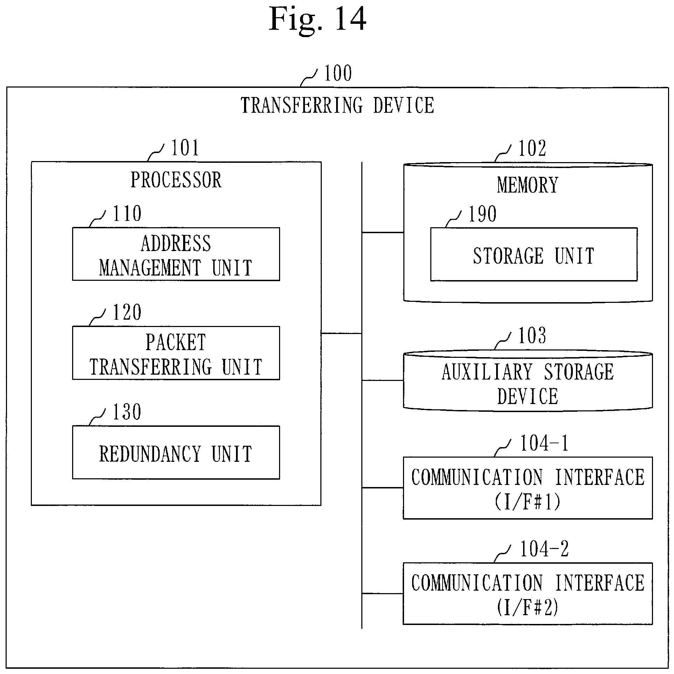

For a mode in which the network system 200 is made redundant and constituted, mainly matters different from the first embodiment will be described with reference to Figs. 14 to 16.

### ^{∗∗∗} Description of Configuration ^{∗∗∗}

A configuration of the transferring device 100 will be described with reference to Fig. 14.

The transferring device 100 further includes a redundancy unit 130.

The transferring program further causes a computer to function as the redundancy unit 130.

Communication and processes regarding redundancy which will be described after are executed by the redundancy unit 130.

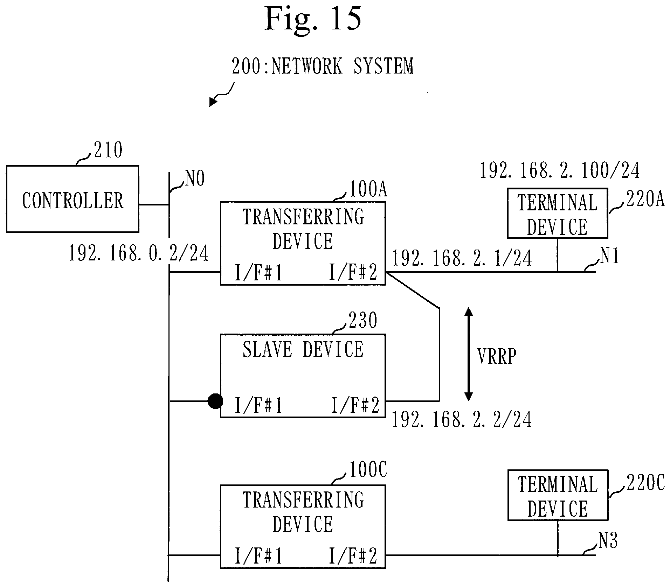

With reference to fig. 15, a configuration of the network system 200 will be described.

The network system 200 further includes a slave device 230. Note that, illustration of a configuration (see Fig. 1) of the subnet N2 is omitted.

The slave device 230 is the transferring device 100 which is an alternative to the transferring device 100A.

The slave device 230 is connected to the upper network (N0) and the lower network (N1) of the transferring device 100A.

When failure of the transferring device 100A occurs, the slave device 230 takes over the address of the transferring device 100A, and operates instead of the transferring device 100A.

In Fig. 15, the black circle means that the I/F#1 of a slave device 230A is in a deactivated state while the transferring device 100A normally operates.

A configuration of the slave device 230 is the same as the configuration (see Fig. 14) of each transferring device 100.

### ^{∗∗∗} Description of Operation ^{∗∗∗}

With reference to Fig. 15, operation of the slave device 230 when the transferring device 100A normally operates will be described.

The slave device 230 communicates with the transferring device 100A following a redundancy protocol of the default gateway.

A specific redundancy protocol is a Virtual Router Redundancy Protocol (VRRP). The VRRP is standardized by RFC2338.

Specifically, the transferring device 100A becomes a VRRP master and transmits a VRRP packet periodically. The slave device 230 receives the VRRP packet. Consequently, the slave device 230 can acquire the address (192.168.2.1/24) of the transferring device 100A in the lower network (N1).

While the transferring device 100A normally operates, the transferring process between the subnet N1 and another subnet is performed by the transferring device 100A. Further, in order to prevent the transferring process from repeating continually, the slave device 230 deactivates the I/F#1 for the upper network (N0) while the slave device 230 performs VRRP backup operation in the lower network (N1).

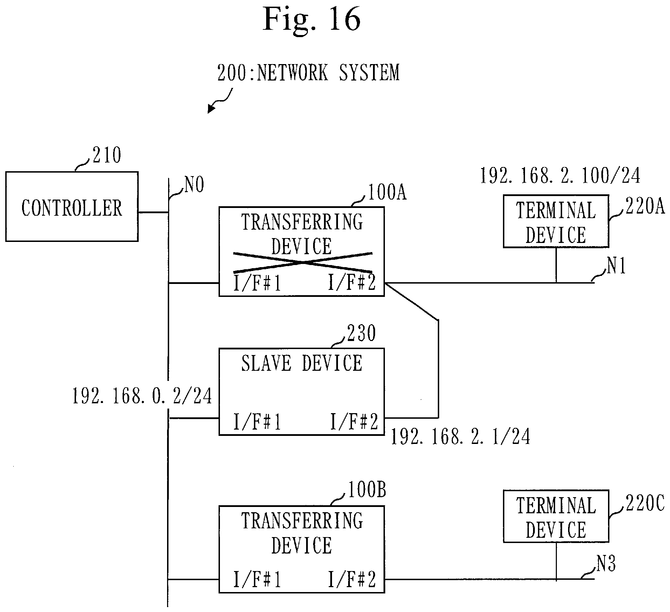

With reference to Fig. 16, operation of the slave device 230 when the failure of the transferring device 100A occurs will be described.

The slave device 230 becomes the VRRP master by operating following the VRRP in the lower network (N1). Then, the slave device 230 takes over the address (192.168.2.1/24) of the transferring device 100A in the lower network (N1). At this time, the slave device 230 sets to the I/F#2, the address to be taken over. This address is a default gateway address of the lower network (N1).

After that, the slave device 230 takes over the address (192.168.0.2/24) of the transferring device 100A in the upper network based on the address (192.168.2.1/24) of the transferring device 100A in the lower network. At this time, the slave device 230 sets to the I/F#1, the address to be taken over. Then, the slave device 230 activates the I/F#1.

The address of the transferring device 100A in the upper network is calculated as follows.

First, the slave device 230 extracts the network address of the lower network from the address (192.168.2.1/24) of the transferring device 100A in the lower network. The extracted network address is "192.168.2".

Next, the slave device 230 extracts the lower bit portion from the network address (192.168.2) of the lower network. Specifically, the slave device 230 extracts a lower M bit. The extracted lower M bit is used as the host address. The host address is "2".

Then, the slave device 230 combines the network address (192.168.0) of the upper network and the host address (2). The obtained address (192.168.0.2) is an address of the transferring device 100A in the upper network.

When the terminal device 220C transmits the packet which is for the terminal device 220A, the packet is forwarded to the slave device 230 by the packet transferring process (see Fig. 7) in the transferring device 100B. As a result, the packet reaches the terminal device 220A via the slave device 230.

### ^{∗∗∗} Description of Examples ^{∗∗∗}

The second embodiment may be applied to the third embodiment. That is, the network system 200 may be constituted of a plurality of hierarchies of subnets, and also, the slave device 230 may be provided with each subnet.

### ^{∗∗∗} Effect of Third Embodiment ^{∗∗∗}

According to the third embodiment, it is possible to respond to a redundancy configuration of the network and still take advantage of characteristics of not managing the routing table. Then, it is possible to develop a highly-reliable network system 200.

Since the transferring device 100 does not need to have the routing table, the transferring device 100 does not need to perform the process of searching in the routing table. However, the transferring device 100 can generate the address of the next hop and forward the packet.

That is, the transferring device 100 does not require the memory which is for the routing table, and the load of the process for searching in the routing table is not applied to the transferring device 100. Further, since the transferring device 100 does not need to exchange pieces of path information between the devices for developing the routing table, the load of the process for exchanging the pieces of path information is not applied to the transferring device 100. Therefore, it is possible to reduce the amount of resource required for the transferring device 100.

### ^{∗∗∗} Supplement to Embodiments ^{∗∗∗}

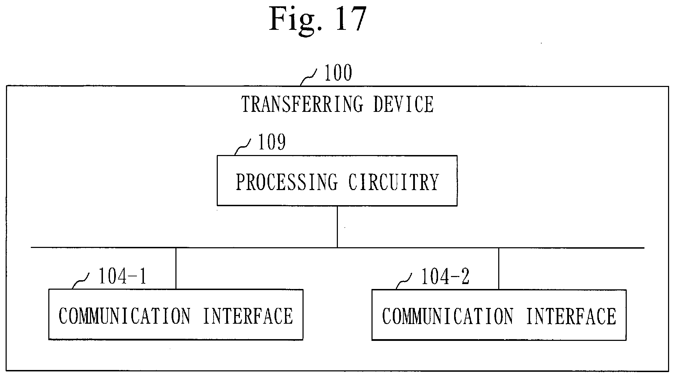

With reference to Fig. 17, a hardware configuration of the transferring device 100 will be described.

The transferring device 100 includes processing circuitry 109.

The processing circuitry 109 is hardware that realizes the address management unit 110, the packet transfer unit 120, and the redundancy unit 130.

The processing circuitry 109 may be dedicated hardware, or may be the processor 101 that executes a program stored in the memory 102.

When the processing circuitry 109 is the dedicated hardware, the processing circuitry 109 is, for example, a single circuit, a composite circuit, a programmed processor, a parallel-programmed processor, an ASIC, an FPGA, or a combination of these.

ASIC stands for Application Specific Integration Circuit.

FPGA stands for Field Programmable Gate Array.

The transferring device 100 may include a plurality of processing circuitries that substitute for the processing circuitry 109. The plurality of processing circuitries share a function of the processing circuitry 109.

In the transferring device 100, a part of functions may be realized by the dedicated hardware, and the remaining functions may be realized by software or firmware.

As described above, each function of the transferring device 100 can be realized by hardware, software, firmware, or a combination of these.

The embodiments are examples of preferred modes, and are not intended to limit the technical scope of the present invention. The embodiments may be implemented partially or may be implemented being combined with other modes. The procedures described using the flowcharts and the like may be changed as appropriate.

"Unit" which is an element of the transferring device 100 may be read as "process" or "step".

### Reference Signs List

100: transferring device, 101: processor, 102: memory, 103: auxiliary storage device, 104: communication interface, 109: processing circuitry, 110: address management unit, 111: address information acquisition unit, 112: address setting unit, 113: subnet address generation unit, 114: address information provision unit, 120: packet transfer unit, 121: packet reception unit, 122: next hop address generation unit, 123: packet forwarding unit, 130: redundancy unit, 190: storage unit, 200: network system, 210: controller, 220: terminal device, 230: slave device.

## Claims

1. A transferring device which is connected to an upper network and a lower network and transfers a packet, comprising:
an address information acquisition unit to acquire address information indicating a network address of the upper network and a host address of the transferring device in the upper network; and
a subnet address generation unit to generate a subnet address which is a network address of the lower network by replacing a lower bit portion in a bit string representing the network address indicated in the acquired address information with a bit string representing the host address indicated in the acquired address information.

2. The transferring device according to claim 1 further comprising:
an address information provision unit to select a host address to be assigned to a terminal device connected to the lower network from a host address range which is based on the generated subnet address, and provide for the terminal device, address information indicating the generated subnet address and the selected host address.

3. The transferring device according to claim 2 further comprising:
a packet reception unit to receive from the terminal device connected to the lower network, a packet which is for a destination device which is a terminal device connected to a subnet different from the lower network;
a next hop address generation unit to extract an address of the destination device from the received packet, extract from the address of the destination device, a network address of a destination subnet which is a subnet to which the destination device is connected, extract a lower bit portion from a bit string representing the network address of the destination subnet, incorporate into the network address of the upper network, the extracted lower bit portion as a host address, and generate a next hop address; and
a packet forwarding unit to forward the received packet to a device which is connected to the upper network and the destination subnet and is recognized by the generated next hop address.

4. The transferring device according to claim 1 or 2 being placed between two consecutive hierarchies of subnets in a plurality of hierarchies of subnets constituting a hierarchized network.

5. The transferring device according to claim 4 further comprising:
a packet reception unit to receive a packet;
a next hop address generation unit to extract a destination address from the received packet, extract as a destination network address, a network address which is based on a subnet mask which is for the upper network, from the extracted destination address, choose the extracted destination address as the next hop address when the extracted destination network address matches the network address of the lower network or the network address of the upper network; and
a packet forwarding unit to forward the received packet to a device recognized by the chosen next hop address.

6. The transferring device according to claim 4 which is placed between the N-th hierarchy subnet and the (N+1)-th hierarchy subnet, further comprising:
a packet reception unit to receive a packet;
a next hop address generation unit to extract a destination address from the received packet, extract as the N-th hierarchy network address, a network address which is based on the N-th hierarchy subnet mask, from the extracted destination address, extract as a lower hierarchy network address, a network address which is based on the N-th hierarchy subnet mask, from the network address of the lower network, extract as the (N+1)-th hierarchy network address, a network address which is based on the (N+1)-th hierarchy subnet mask, from the extracted destination address when the N-th hierarchy network address matches the lower hierarchy network address, extract a lower bit string from a bit string representing the extracted (N+1)-th hierarchy network address, and generate a next hop address by incorporating into the network address of the lower network, the extracted lower bit string as a host address; and
a packet forwarding unit to forward the received packet to a device recognized by the generated next hop address.

7. The transferring device according to claim 4 which is placed between the N-th hierarchy subnet and the (N+1)-th hierarchy subnet, further comprising:
a packet reception unit to receive a packet;
a next hop address generation unit to extract a destination address from the received packet, extract as the (N-1)-th hierarchy network address, a network address which is based on the (N-1)-th hierarchy subnet mask, from the extracted destination address, extract as an upper hierarchy network address, a network address which is based on the (N-1)-th hierarchy subnet mask, from the network address of the upper network, extract as the N-th network address, a network address which is based on the N-th hierarchy subnet mask, from the extracted destination address when the (N-1)-th hierarchy network address matches the upper hierarchy network address, extract a lower bit string from a bit string representing the extracted N-th hierarchy network address, and generate a next hop address by incorporating into the network address of the upper network, the extracted lower bit string as a host address; and
a packet forwarding unit to forward the received packet to a device recognized by the generated next hop address.

8. A network system comprising:
the transferring device according to any one of claims 1 to 7; and
a slave device which is connected to the upper network and the lower network, and when failure of the transferring device occurs, takes over an address of the transferring device and operates instead of the transferring device.

9. The network system according to claim 8,
wherein the slave device acquires an address of the transferring device in the lower network while the transferring device normally operates, and when failure of the transferring device occurs, takes over the address of the transferring device in the lower network and takes over an address of the transferring device in the upper network based on the address of the transferring device in the lower network.
